# EUROPEAN PATENT SPECIFICATION

(11) **EP 0 691 178 B1**
(45) Date of publication and mention of the grant of the patent: **30.09.1998**
(21) Application number: 95107344.4
(22) Date of filing: 15.05.1995
(51) Int. Cl.: B23Q 39/04

(54) **Revolving worktable to be driven by machine tools operating on controlled axes**
Drehtisch, angetrieben von mit gesteuerten Achsen arbeitenden Werkzeugmaschinen
Table tournante, entraînée par des machines-outils fonctionnant avec des axes contrôlées

(30) Priority: 20.05.1994 IT BO940237
(43) Date of publication of application: 10.01.1996
(73) Proprietor: TECNA S.p.A., I-40024 Castel San Pietro Terme (Prov. of Bologna) (IT)
(72) Inventor: Amadori, Ezio, I-40024 Castel san P. Terme (Bologna) (IT)
(74) Representative: Modiano, Guido, Dr.-Ing.

(56) References cited:
- DE-A- 2 021 985
- DE-B- 1 237 407
- PATENT ABSTRACTS OF JAPAN vol. 2 no. 157 (M-44) ,27 December 1978 & JP-A-53 122987 (HITACHI) 26 October 1978,

## Description

The present invention relates to a revolving worktable to be driven by automatically-moving machine tools.

It is known that, particularly during machining and welding, machine tools are used which have automatic movements placing the tool or the electrode in succession at different points of the usable work area. In order to feed and unload the components being machined without penalizing the productivity of the system, and to ensure that the assigned operator is protected against accidents, revolving worktables with fixed or programmable steps are often used; these revolving worktables have the task of exchanging the parts between the loading/unloading station and the machining stations.

The need to keep the fixtures fixed in the manned station, in order to allow the operator to act thereon to replace the machined component with the successive one to be machined, forces, even in machining stations, to keep the fixtures fixed and to assign all the necessary movements to the machine tools, that is to say, to provide complex systems that disengage the fixtures from the revolving worktable and then move them independently to finally return them to the revolving worktable for subsequent exchange.

As a consequence, the electric actuator and the kinematic systems that are meant to motorize the worktable and can potentially be used to contribute to the movement of the fixture in the machining station, are used only for transfer between the stations.

From DE 2021985A it is known a revolving worktable to be driven by machine tools operating on controlled axes, as defined in the preamble of independent claim 1.

The technical aim of the present invention is to make the movement of the worktable in the machining stations independent of the disallowed movement in the manned station where the component is placed.

Within the scope of this aim, an object of the invention is to simplify the provision of the automatic movement of the machine tool, which is reduced to a controlled axis and is replaced by the contribution of the movement of the worktable.

This aim and this object are achieved with a revolving worktable to be driven by machine tools operating on controlled axes, as defined in claim 1.

Further characteristics and advantages of the present invention will become apparent from the following detailed description of a preferred embodiment thereof, illustrated only by way of non-limitative example in the accompanying drawings, wherein:

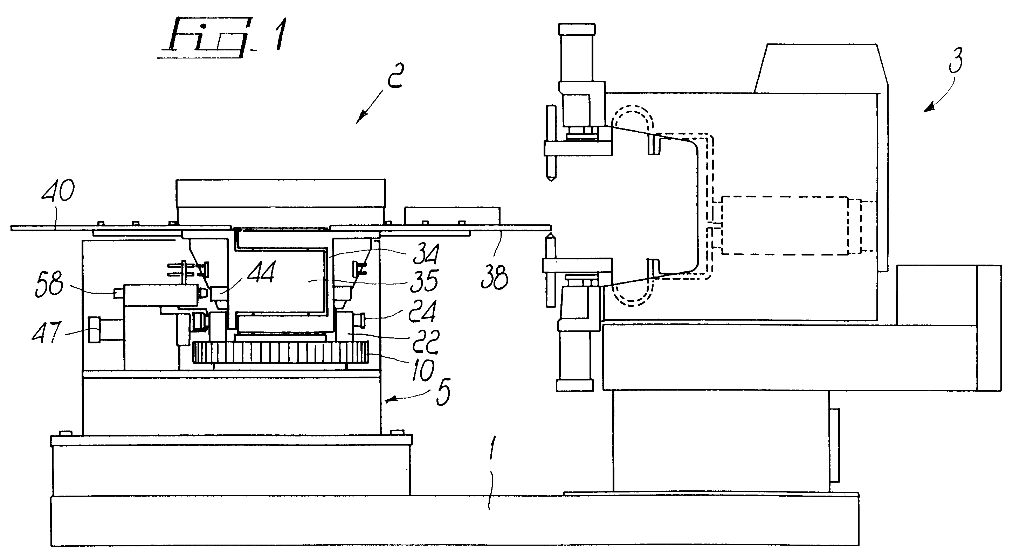

figure 1 is a side view of the worktable, associated with a spot welding machine;

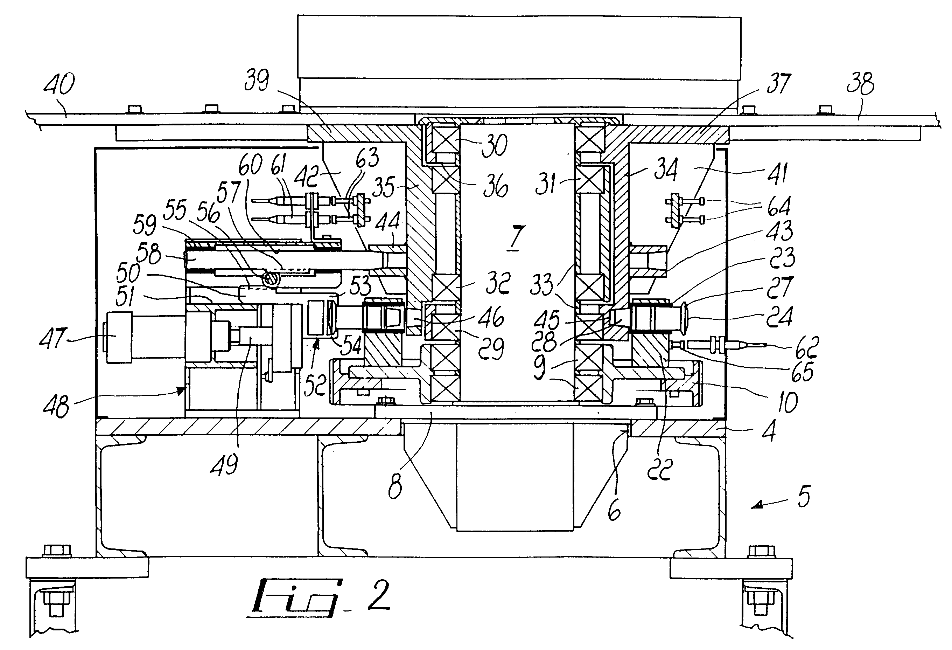

figure 2 is a lateral sectional view of the worktable;

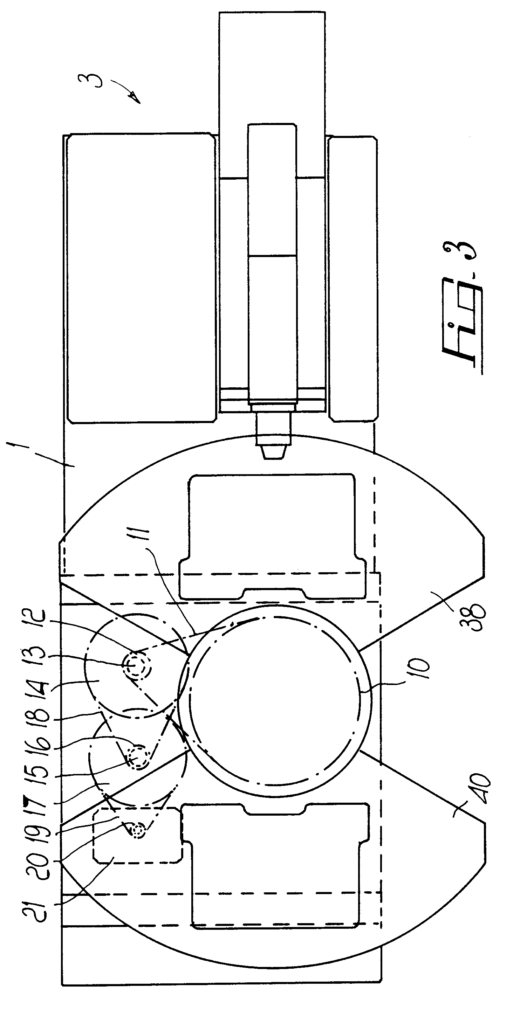

figure 3 is a plan view thereof;
figures 4, 5, 6, and 7 are schematic views of the worktable in four operating conditions.

With reference to the above figures, the reference numeral 1 designates a footing on which the worktable 2 and the machine tool 3 are installed; in the illustrated case, said machine tool is constituted by a spot welding machine, but it can be of another kind, such as for example a drill, a tapping machine, and the like.

The worktable 2 is constituted by a plate 4 that is fixed to the footing by means of a base 5 and has an opening 6 in which a stationary shaft 7 is centered; said shaft rises vertically from the plate 4. The shaft 7 is provided with a flange 8, by means of which it is fixed to the plate 4 with bolts.

Two bearings 9 are arranged on the shaft 7 directly above the flange 8 and rotatably support a toothed pulley 10 on which a toothed belt 11 is engaged; said belt is closed in a loop around a toothed pinion 12 that is keyed on a first auxiliary vertical shaft 13. The shaft 13 is rotatably mounted on the plate 4, and a toothed pulley 14, larger in diameter than the pinion 12, is keyed on said shaft 13.

The toothed pulley 14 is a part of a reduction and transmission unit that also comprises a second auxiliary shaft 15, which is rotatably supported on the plate 4, and a pinion 16 and a larger-diameter toothed pulley 17 that are both keyed on the shaft 15.

The pinion 16 is connected to the pulley 14 by a toothed belt 18, whereas the pulley 17 is connected, by means of a third toothed belt 19, to the pinion 20 of an electric actuation motor 21 mounted on the plate 4.

Three blocks 22 are fixed to the pulley 10 and are angularly offset by 120^{o} around the shaft 7. Respective radial holes are formed in the blocks 22 and accommodate bushes 23 in which pins 24, 25, and 26 are guided. Each pin has, at the end that lies outside the block 22, a head 27 with a wider diameter and has, at the inside end, a conical tang 28.

Two pairs of bearings 29, 30 and 31, 32 are arranged on the shaft 7 above the pulley 10 and are appropriately positioned axially by means of spacers 33. Each one of the pairs of bearings 29, 30 and 31, 32 supports a respective sleeve 34 and 35. The sleeve 35 is accommodated inside the sleeve 34 and can be accessed externally through an opening 36 that affects a rather large angular sector of the sleeve 34.

An L-shaped element 37 is rigidly coupled to the sleeve 34 and supports a flat sector 38. Likewise, an L-shaped element 39 is rigidly coupled to the sleeve 35 and supports a flat sector 40. The sectors 38 and 40 cover an angle of 120^{o}. The L-shaped elements 37 and 39 are reinforced by pairs of parallel ribs 41 and 42 between which bushes 43 and 44 are fixed; said bushes protrude radially from the respective sleeves 34 and 35 above the blocks 22. Holes 45, 46 are formed in the sleeves 34, 35 below the bushes 43 and 44 at the level of the pins 24, 25, and 26, and are adapted to receive in succession, as explained hereinafter, the tangs 28 of the pins 24, 25, and 26.

In order to actuate the pins 24-26 into the position for engaging the holes 45 and 46 there is an actuator that is constituted by a pneumatic jack 47 that is fixed to the plate 4 by means of a support 48 and is aligned, with respect to the shaft 7, in a diametrically opposite position relative to the welding machine 3.

The jack 47 has an axis that is radial to the shaft 7 and has a bar 50 that is rigidly coupled to the stem 49 and slides in a guide 51 of the support 48.

The bar 50 has, at its inner end, a sort of claw 52 that is composed of two hooks 53 and 54 that are mutually superimposed and form an opening that is arranged on a plane that is radial with respect to the shaft 7 and is therefore open in a tangential direction. The shape of the opening is such as to allow the head 27 of the pins 24-26 to pass therethrough although it can still be engaged by the claw when the head 27 is between the hooks 53 and 54.

A rack 55 is formed along the upper edge of the bar 50, and a pinion 56, freely supported in the support 48, meshes with said rack. A second rack 57, formed along a rod 58, also meshes with the pinion 56; said rod is slidingly guided by bushes 59 in a seat 60 of the support 48. Said rod 58 can be aligned radially with respect to the bush 43 or 44 and moves, by virtue of the pinion 56, in opposition to the bar, so as to fit in, or disengage from, the bush 43 or 44 that is momentarily aligned therewith, like the bolt of a lock.

The described worktable is completed by sensors 61 and 62 that cooperate with locators 63 and 64 that are fixed between the ribs 41 and 42 and with locators 65 that are fixed to the blocks 22. The jack 47 and the motor 21 are operatively associated with the sensors 61 and 62.

The described revolving worktable operates as follows.

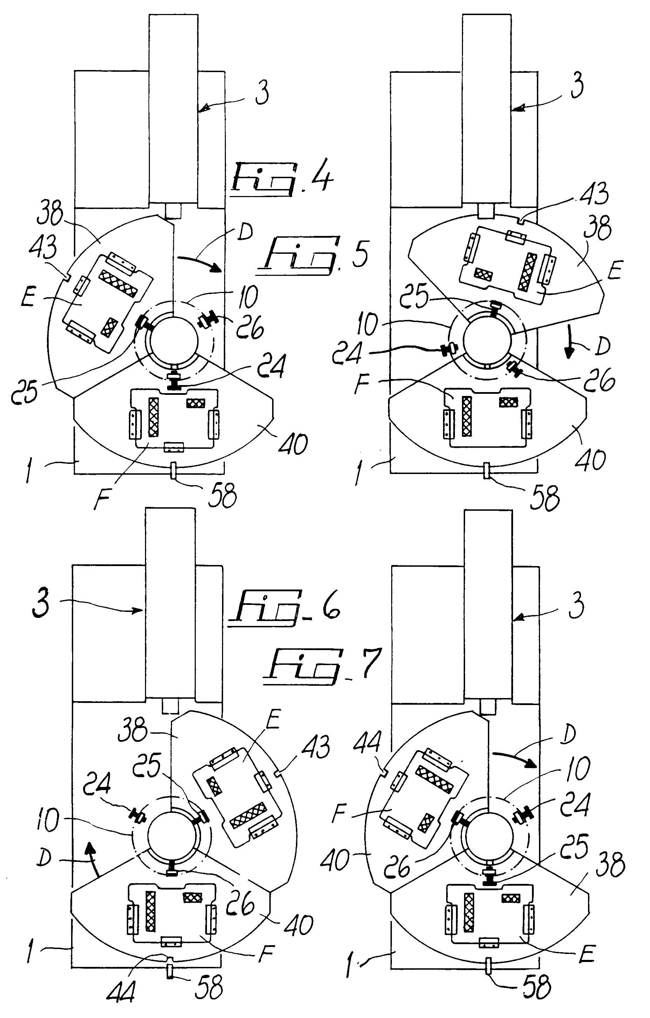

Assume an initial situation, shown in figure 4, in which the bolt 58 engages the bush 44 of the sector 40, and therefore the claw 52 is retracted and keeps one of the three pins 24-26 (designated by the reference numeral 24 in figure 4) disengaged from the hole 46 of the sleeve 35 that corresponds to said sector 40. In figures 4 to 7, for the sake of clarity, the bushes 43 and 44 have been shown schematically as notches on the peripheral region of the sectors 38 and 40.

In the described situation, the sector 38 is rotationally coupled to the pulley 10 by virtue of the engagement of a second pin 25 in the hole 45 of the sleeve 34. The third pin 26 is disengaged like the pin 24.

The actuation of the motor 21 causes the rotation of the sector 38 in the direction D, so as to move the part E, placed thereon, at the welding machine 3 to perform the required machining (figure 5). During this step, the pin 24 can exit tangentially from the claw 52, as it is not engaged in the hole 46.

After the step for placing a new part F on the sector 40 has been completed and the welding operations on the part E have ended, and after the sector 38 has moved into the position of figure 6, that is to say, after a rotation through 120^{o} with respect to the initial position, the pin 26 is engaged in the claw 52. At this point the jack 47 is activated, disengaging the bolt 58 from the bush 44. Simultaneously, the claw 52 pushes the pin 26 into the hole 46, providing the rotational coupling between the sleeve 35 and the pulley 10 that allows to rotationally actuate the sector 40.

After a further rotation through 120^{o}, the sector 38 is located in the position that was previously occupied by the sector 40, with the pin 25 engaged in the claw 52.

The actuation of the jack 47 produces, by means of the claw 52, the disengagement of the pin 25 from the hole 46; this allows the sector 40 to continue its rotation to move the new part F below the welding machine. At the same time, the bolt 58 engages the bush 43, thus locking the sector 38 for removing the part E and placing a new part.

The above operations are then repeated according to the above described method.

A feature of the described worktable is constituted by the fact that the sector from which the machined part is removed and on which a new part is placed, remains stationary so as to ensure optimum conditions for loading and unloading.

Another advantage of the invention becomes evident in its application in highly repetitive operations, such as the projection welding of small items, which is usually performed on conventional revolving worktables with multiple fixtures, that drive the tack welding machine.

In this case, the operator is forced to work in a highly constrained manner with movements that follow a mandatory sequence.

The revolving worktable with independent sectors according to the present invention, by having a plurality of motionless fixtures, allows the operator to perform free sequences (he can for example unload all the finished parts, then load all the components in succession, or unload and load one fixture at a time).

Numerous modifications and variations are possible in the practical embodiment of the invention, and all are within the scope of the same inventive concept.

In particular, the number of sectors can be greater than two, each sector covering, however, an angle α of no more than 360^{o}/(n+1), where n is the number of sectors. With these dimensions, an empty region is left, allowing the sector that supports the part to move with respect to the machine tool without interfering with the stationary sector. Thus, for example, it is possible to have sectors that cover angles of 90^{o}, 60^{o}, and 45^{o}. With these angles, four, six, and eight pins 24-26 are provided respectively.

A different embodiment of the invention uses, instead of the jack 47, of the corresponding claw 52, and of the bolt 58, an assembly with positively-actuated cams or an assembly with sliding sleeves that are coaxial to the sleeves 34 and 35 and are provided with front couplings instead of the pins 24-26.

In another embodiment, an electromagnetic actuator is used instead of the jack 47.

In a further emodiment, two pneumatic pistons, driven in opposition by a same electric valve, are used instead of the double-rack device (55, 56, 57).

In a fully equivalent manner, instead of pins 24 having the described mushroom-like shape, it is possible to provide fully cylindrical pins having a T-shaped diametrical milling at their outer end, a complementarily shaped head engaging said milling and replacing the claw 52.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A revolving worktable to be driven by machine tools operating on controlled axes, comprising: a plurality of sectors (38, 40), which are rotatably supported about a vertical shaft (7), said sectors being provided with sleeves (34, 35) that are rotatably supported on a stationary vertical shaft (7), each sector having means for fixing the part to be machined, said sectors covering an angle α of no more than 360^{o}/(n+1), where n is the number of sectors; coupling means (24-26) for said sectors (38,40) to actuation means (10-21) to transfer, in succession, said sectors (38,40) from a part loading and unloading station to a machining station; and retaining means (58) for the sectors at said loading and unloading station, said retaining means (58) cooperating with said coupling means, characterized in that the retaining means is a bolt-like element (58) cooperating with said coupling means (24-26) and is adapted to engage in a seat (44) of said sleeves, said element (58) being actuated so as to rotationally lock the sleeve (34,35) of the sector (38, 40) that is in said loading and unloading position to allow to place a new part and remove the machined part.

2. A worktable according to claim 1, characterized in that a toothed pulley (40) is also rotatably supported on said shaft, said pulley being connected to motorization means (10-21), in that said coupling means is a plurality of pins and in that worktable seats (23) are provided on said worktable to accommodate said plurality of pins (24-26) that are guided radially between a position for engagement in respective holes (45, 46) of said sleeves (34, 35) to provide the rotational connection between said pulley (10) and said sectors (38, 40), and a disengagement position, actuation means (47) being also provided to actuate said pins (24-26) between said engagement and disengagement positions.

3. A worktable according to claim 2, characterized in that said actuation means comprise a jack (47), a claw (52) being associated with the stem (49) of said jack, said claw being adapted to be engaged by a respective pin (24-26) in said loading and unloading position, said jack being operated so as to actuate said claw (52) into a position in which the pin that it engages produces the rotational coupling between said toothed pulley (10) and a respective sleeve (34, 35), said claw (52) being shaped so as to allow said pin (24-26) to disengage therefrom during the rotation of said sleeve.

4. A worktable according to claim 3, characterized in that said claw (52) has a rack-like portion (55) with which a pinion (56) meshes, said pinion also meshing with a rack (57) that is formed on said bolt-like element (58), the actuation of said jack (47) being adapted to produce the actuation, in opposite directions, of said bolt-like element (58) and of said claw (52) so that when the bolt-like element (58) rotationally locks a sleeve (34,35), the claw (52) moves the corresponding pin (24-26) into the position for disengaging said toothed pulley (10) from said sleeve.

5. A worktable according to one of claims 2 to 5, characterized in that said motorization means comprise a reduction and transmission unit (11-20) with toothed bolts.

## Patentansprüche

1. Drehbarer Arbeitstisch, der durch Bearbeitungswerkzeuge, die auf gesteuerten Achsen betrieben werden, angetrieben wird sowie umfaßt: eine Anzahl von Sektoren (38, 40), die drehbar um eine vertikale Achswelle (7) gelagert sind, wobei die Sektoren mit Buchsen (34, 35) versehen sind, die drehbar an einer stationären, vertikalen Achswelle (7) gelagert sind, wobei jeder Sektor Einrichtungen zum Befestigen des zu bearbeitenden Teils aufweist und die Sektoren einen Winkel α von nicht mehr als 360°/(n+1) überdecken, wobei n die Anzahl der Sektoren ist; sowie ferner umfaßt;
Kopplungseinrichtungen (24 - 26) zum Ankoppeln der Sektoren (38, 40) an die Betätigungseinrichtungen (10 - 21), um die Sektoren (38, 40) aufeinanderfolgend von einer Teile-Belade- und -entladestation zu einer Bearbeitungsstation zu überführen; und eine Rückhalteeinrichtung (58) zum Zurückhalten der Sektoren an der Belade- und Entladestation, wobei die Zurückhalteeinrichtung (58) mit den Kopplungseinrichtungen zusammenarbeitet, **dadurch gekennzeichnet, daß** die Rückhalteeinrichtung ein bolzenähnliches Element ist, das mit den Kopplungseinrichtungen (24 - 26) zusammenarbeitet, und ausgebildet ist, um in einen Sitz (44) der Laufbuchsen einzugreifen, wobei das Element (58) so betätigt wird, daß die Laufbuchse (34, 35) des Sektors (38, 40), der sich in der Lade-und Entladeposition befindet für die Drehung gesperrt ist, um das Einbringen eines neuen Teils und das Entfernen eines bearbeiteten Teils zu ermöglichen.

2. Arbeitstisch nach Anspruch 1, **dadurch gekennzeichnet, daß** eine gezahnte Riemenscheibe (10) ebenfalls an der Achswelle drehbar gelagert ist, wobei die Riemenscheibe mit den Motorisierungseinrichtungen (10 - 21) verbunden ist, daß die Kopplungseinrichtungen aus einer Vielzahl von Zapfen bestehen und daß die Arbeitstischsitze (23) an dem Arbeitstisch vorgesehen sind, um die Vielzahl von Zapfen (24 - 26) aufzunehmen, die zwischen einer Position zum Eingreifen an entsprechenden Öffnungen (45, 46) der Laufbuchsen (34, 35), um die Drehverbindung zwischen der Riemenscheibe (10) und den Sektoren (38, 40) bereitzustellen, und einer gelösten Position radial geführt sind, wobei ebenfalls Betätigungseinrichtungen (47) vorgesehen sind, um die Zapfen (24 - 26) zwischen der Eingreifposition und gelösten Position zu betätigen.

3. Arbeitstisch nach Anspruch 2, **dadurch gekennzeichnet, daß** die Betätigungseinrichtung einen Arbeitszylinder (47) und eine Klaue (52) umfaßt, die mit der Stange (49) des Arbeitszylinders verbunden ist, wobei die Klaue angepaßt ist, um in der Belade- und Entladeposition durch einen jeweiligen Zapfen (24 - 26) eingerastet zu sein, wobei der Arbeitszylinder betrieben wird, so daß die Klaue (52) in eine Position gebracht wird, in der der Zapfen, der in sie einrastet, die Drehkopplung zwischen der gezahnten Riemenscheibe (10) und der jeweiligen Laufbuchse (34, 35) herstellt, und wobei die Klaue (52) so geformt ist, daß dem Zapfen (24 - 26) ermöglicht wird, sich davon während der Drehung der Laufbuchse zu lösen.

4. Arbeitstisch nach Anspruch 3, **dadurch gekennzeichnet, daß** die Klaue (52) einen zahnstangenartigen Bereich (55) aufweist, mit dem ein Antriebsrad (56) ineinandergreift, wobei das Antriebsrad ebenfalls mit einer Zahnstange (57) ineinandergreift, die an dem bolzenähnlichen Element (58) ausgebildet ist, wobei die Betätigung des Arbeitszylinders (47) daran angepaßt ist, die Betätigung, in entgegengesetzten Richtungen, des bolzenartigen Elements (58) und der Klaue (52) bereitzustellen, so daß, wenn das bolzenartige Element (58) die Drehung einer Laufbuchse (34, 35) blockiert, die Klaue (52) den entsprechenden Zapfen (24 - 26) in die Position bringt, um die gezahnte Riemenscheibe (10) von der Laufbuchse zu lösen.

5. Arbeitstisch nach einem der Ansprüche 2 bis 5, **dadurch gekennzeichnet, daß** die Motorisierungseinrichtung eine Reduktions- und Transmissionseinheit (11 - 20) mit gezahnten Bolzen umfaßt.

## Revendications

1. Table porte-pièce pouvant tourner, entraînée par des machines-outils fonctionnant sur des axes commandés, qui comprend : une pluralité de secteurs (38, 40) supportés en pouvant tourner autour d'un arbre vertical (7), lesdits secteurs comportant des douilles (34, 35) qui sont supportées en pouvant tourner sur un arbre vertical immobile (7), chaque secteur comportant un moyen pour fixer la pièce à usiner, lesdits secteurs couvrant un angle α qui n'excède pas 360°/(n+1), n étant le nombre dc secteurs ; des moyens d'accouplement (24-26) desdits secteurs (38, 40) à des moyens d'actionnement (10-21) en vue du transfert successif desdits secteurs (28, 40) d'un poste de chargement et déchargement des pièces à un poste d'usinage ; et un moyen de retenue (58) des secteurs au niveau dudit poste de chargement et déchargement des pièces, ledit moyen de retenue (58) coopérant avec lesdits moyens d'accouplement,
caractérisée en ce que le moyen de retenue est un élément (58) en forme de goujon qui coopère avec lesdits moyens d'accouplement (24-26) et peut s'engager dans un logement (44) formé dans lesdites douilles, ledit élément (58) étant actionné pour bloquer en rotation la douille (34, 35) du secteur (38, 40) qui est dans ladite position de chargement et déchargement afin de permettre la mise en place d'une nouvelle pièce et le retrait de la pièce usinée.

2. Table porte-pièce selon la revendication 1, caractérisé en ce qu'une poulie dentée (40) est également supportée en pouvant tourner sur ledit arbre, ladite poulie étant couplée à des moyens de motorisation (10-21), en ce que lesdits moyens d'accouplement sont une pluralité de broches et en ce que des logements (23) sont formés sur ladite table pour recevoir lesdites broches (24-26) qui sont guidées radialement entre une position d'engagement dans des trous respectifs (45, 46) desdites douilles (34, 35) afin d'assurer un accouplement rotatoire entre ladite poulie (10) et lesdits secteurs (38, 40) et une position de séparation, un moyen d'actionnement (47) étant en outre présent pour actionner lesdites broches (24-26) entre lesdites position d'engagement et de séparation.

3. Table porte-pièce selon la revendication 2, caractérisée en ce que ledit moyen d'actionnement comprend un vérin (47), une griffe (52) associée à la tige (49) dudit vérin, ladite griffe pouvant se mettre en prise avec une broche correspondante (24-26) dans ladite position de chargement et déchargement, ledit vérin fonctionnant pour amener ladite griffe (52) dans une position où la broche avec laquelle elle est en prise produit l'accouplement rotatoire entre ladite poulie dentée (10) et une douille respective (34, 35), ladite griffe (52) ayant une forme qui permet à ladite broche (24-26) de s'en séparer pendant la rotation de ladite douille.

4. Table porte-pièce selon la revendication 3, caractérisée en ce que ladite griffe (52) comprend une partie (55) en forme de crémaillère avec laquelle engrène un pignon (56), ledit pignon engrenant également avec une crémaillère (57) formée sur ledit élément (58) en forme de goujon, le fonctionnement dudit vérin (47) étant apte à produire l'actionnement, en sens opposés, dudit élément (58) en forme de goujon et de ladite griffe (52) de sorte que, lorsque ledit élément (58) en forme de goujon bloque en rotation une douille (34, 35), la griffe (52) déplace la broche correspondante (24-26) vers la position de séparation de ladite poulie dentée (10) de ladite douille.

5. Table porte-pièce selon l'une quelconque des revendications 2 à 5, caractérisée en ce que lesdits moyens de motorisation comprennent une unité (11-20) de réduction et transmission avec des courroies crantées.
